# EUROPÄISCHE PATENTSCHRIFT

(11) **EP 3 347 787 B1**
(45) Veröffentlichungstag und Bekanntmachung des Hinweises auf die Patenterteilung: **09.12.2020**
(21) Anmeldenummer: 16741290.7
(22) Anmeldetag: 15.07.2016
(51) Int. Cl.: G05D 1/02

(54) **VERFAHREN UND VORRICHTUNG ZUM BETREIBEN EINES FAHRZEUGS**
METHOD AND DEVICE FOR OPERATING A VEHICLE
PROCÉDÉ ET DISPOSITIF POUR FAIRE FONCTIONNER UN VÉHICULE

(30) Priorität: 11.09.2015 DE 102015217389
(43) Veröffentlichungstag der Anmeldung: 18.07.2018
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2016/066867
(87) Internationale Veröffentlichungsnummer: WO 2017/041942

(56) Entgegenhaltungen:
- EP-A1- 1 143 314
- DE-A1-102014 014 249
- US-A1- 2010 156 672

## Beschreibung

Die Erfindung betrifft ein Verfahren und eine Vorrichtung zum Betreiben eines Fahrzeugs. Die Erfindung betrifft ein Fahrzeug. Die Erfindung betrifft des Weiteren ein Verfahren zum Betreiben eines Parkplatzes für Fahrzeuge. Die Erfindung betrifft einen Parkplatz für Fahrzeuge sowie ein Computerprogramm.

### Stand der Technik

Die Offenlegungsschrift DE 10 2012 222 562 A1 zeigt ein System für bewirtschaftete Parkflächen zur Überführung eines Fahrzeugs von einer Startposition in eine Zielposition.

Bei einem vollautomatisierten (autonomen) sogenannten Valet Parking wird ein Fahrzeug von seinem Fahrer auf einer Abgabestelle, zum Beispiel vor einem Parkhaus geparkt und von da fährt das Fahrzeug selber in eine Parkposition / Parkbucht und wieder zurück zur Abgabestelle.

Beim sogenannten vollautomatisierten Valet Parking ist es wichtig, dass das autonom fahrende Fahrzeug keine Unfälle verursacht, zum Beispiel mit einem Objekt, welches sich innerhalb des Parkplatzes befindet, kollidiert.
Die Offenlegungsschrift US 2010/0156672 A1 offenbart ein System und ein Verfahren zum automatischen Parken von Fahrzeugen.
Die Offenlegungsschrift DE 10 2014 014 249 A1 offenbart ein Verfahren zu, Betrieb eines Kraftfahrzeugs.

Die Offenlegungsschrift EP 1 143 314 A1 offenbart ein Konzept zum Detektieren eines Fehlers in einem Prozessor.

### Offenbarung der Erfindung

Die der Erfindung zugrunde liegende Aufgabe ist darin zu sehen, ein effizientes Konzept bereitzustellen, welches ein Unfall- oder Kollisionsrisiko für ein innerhalb eines Parkplatzes führerlos fahrendes Fahrzeug effizient verringert.

Nach einem Aspekt wird ein Verfahren zum Betreiben eines Fahrzeugs bereitgestellt, wobei bei einer führerlosen Fahrt des Fahrzeugs innerhalb eines Parkplatzes und bei Vorliegen einer Notstoppanforderung, dass das führerlos fahrende Fahrzeug anhalten soll, überprüft wird, ob das Anhalten notwendig ist, wobei ausschließlich bei positiver Überprüfung ein Notstoppsignal erzeugt wird, ansprechend auf welchen das Fahrzeug führerlos anhält.

Gemäß einem weiteren Aspekt wird eine Vorrichtung zum Betreiben eines Fahrzeugs bereitgestellt, umfassend eine Notstoppeinrichtung, die ausgebildet, das Fahrzeug bei einer führerlosen Fahrt des Fahrzeugs innerhalb eines Parkplatzes ansprechend auf ein Notstoppsignal anzuhalten, und eine Überprüfungseinrichtung, die ausgebildet ist bei Vorliegen einer Notstoppanforderung, dass das Fahrzeug anhalten soll, zu überprüfen, ob das Anhalten notwendig ist, wobei die Überprüfungseinrichtung ausgebildet ist, ausschließlich bei positiver Überprüfung ein Notstoppsignal für die Notstoppeinrichtung zu erzeugen.

Nach noch einem Aspekt wird ein Fahrzeug bereitgestellt, welches für eine führerlose Fahrt innerhalb eines Parkplatzes ausgebildet ist, wobei das Fahrzeug die Vorrichtung zum Betreiben eines Fahrzeugs umfasst.

Nach einem anderen Aspekt wird ein Verfahren zum Betreiben eines Parkplatzes für Fahrzeuge bereitgestellt, wobei bei einer führerlosen Fahrt eines Fahrzeugs innerhalb des Parkplatzes und bei Vorliegen einer Notstoppanforderung, dass das Fahrzeug anhalten soll, fahrzeugextern überprüft wird, ob das Anhalten notwendig ist, wobei ausschließlich bei positiver Überprüfung ein Notstoppsignal erzeugt und an das führertos fahrende Fahrzeug über ein Kommunikationsnetzwerk gesendet wird.

Gemäß einem weiteren Aspekt wird ein Parkplatz für Fahrzeuge bereitgestellt, wobei der Parkplatz ausgebildet ist, das Verfahren zum Betreiben eines Parkplatzes für Fahrzeuge durchzuführen.

Gemäß einem anderen Aspekt wird ein Computerprogramm bereitgestellt, welches Programmcode zur Durchführung des Verfahrens zum Betreiben eines Fahrzeugs und/oder zur Durchführung des Verfahrens zum Betreiben eines Parkplatzes für Fahrzeuge umfasst, wenn das Computerprogramm auf einem Computer ausgeführt wird.

Die Erfindung umfasst also insbesondere und unter anderem den Gedanken, dass, bevor das führerlos fahrende Fahrzeug ansprechend auf ein Notstoppsignal anhält, zunächst überprüft wird, ob ein Anhalten notwendig ist. Wenn bei der Überprüfung festgestellt wird, dass das Anhalten nicht notwendig ist, so wird das Fahrzeug nicht anhalten ungeachtet dessen, dass eine Notstoppanforderung für das Fahrzeug vorliegt.

Sofern bei der Überprüfung festgestellt wird, dass ein Anhalten notwendig ist, so wird ein Notstoppsignal erzeugt, ansprechend auf welchem das Fahrzeug führerlos anhält. Das heißt also, dass eine positive Überprüfung bedeutet, dass die Überprüfung ergeben hat, dass ein Anhalten notwendig ist. Eine negative Überprüfung bedeutet, dass die Überprüfung ergeben hat, dass ein Anhalten nicht notwendig ist.

Dadurch also, dass vor dem Anhalten noch einmal überprüft wird, ob das Anhalten notwendig ist, kann in vorteilhafter Weise sichergestellt werden, dass die Situation, die zu der Notstoppanforderung geführt hat, wirklich eine Situation ist, die ein Anhalten notwendig macht. Somit können zum Beispiel Fehlalarme vermieden werden, die unter Umständen einen Betrieb des Parkplatzes stören könnten, wenn das Fahrzeug bei einem solchen Fehlalarm unnötigerweise anhält. Gegebenenfalls könnten zu viele Fehlalarme dazu führen, dass aufgrund mangelnder Akzeptanz ganz auf ein Anhalten ansprechend auf ein Notstoppsignal verzichtet wird, was dann aber wiederum zu Kollisionen führen könnte.

Es wird also insbesondere der technische Vorteil bewirkt, dass ein effizientes Anhalten des Fahrzeugs bei Vorliegen einer Notstoppanforderung ermöglicht ist.

Des Weiteren wird durch das Vorsehen der Überprüfung insbesondere der technische Vorteil bewirkt, dass eine Akzeptanz für ein solches Konzept vergrößert ist. Denn bei zu vielen Fehlalarmen könnte eine Akzeptanz für ein Konzept, welches ein Anhalten bei Vorliegen einer Notstoppanforderung vorsieht, kleiner werden, denn in der Regel sind Fehlalarme nicht beliebt. Denn so könnte zum Beispiel ein gestörter Betrieb des Fahrzeugs für Nutzer unnötigerweise Zeit kosten. Somit kann also aufgrund des erfindungsgemäßen Vorsehens der Überprüfung zum Beispiel der technische Vorteil bewirkt werden, dass Zeit für einen Nutzer eingespart werden kann, insofern ein Betrieb des Fahrzeugs respektive des Parkplatzes nicht oder zumindest weniger gestört wird.

Ein Fahrzeug ist nach einer Ausführungsform ein Kraftfahrzeug. Das Kraftfahrzeug ist zum Beispiel ein Personenkraftwagen (Pkw) oder ein Lastkraftwagen (Lkw). Das Kraftfahrzeug ist zum Beispiel ein zweirädriges Kraftfahrzeug, zum Beispiel ein Motorrad. Fahrzeuge im Sinne der vorliegenden Erfindung sind somit zum Beispiel Kraftfahrzeuge.

Ein Parkplatz im Sinne der vorliegenden Erfindung kann als eine Parkfläche bezeichnet werden und dient als Abstellfläche für Fahrzeuge. Der Parkplatz bildet somit eine zusammenhängende Fläche, die mehrere Stellplätze (bei einem Parkplatz auf privatem Grund) oder Parkstände (bei einem Parkplatz auf öffentlichem Grund) aufweist. Der Parkplatz ist nach einer Ausführungsform als ein Parkhaus ausgebildet. Der Parkplatz ist nach einer Ausführungsform als einer eine Parkgarage ausgebildet.

In einer Ausführungsform ist die führerlose Fahrt des Fahrzeugs von einem automatischen Parkvorgang umfasst. Ein solcher automatischer Parkvorgang umfasst, dass das Fahrzeug von einer Startposition, die auch als eine Abgabeposition bezeichnet werden kann, fahrer- oder führerlos zu einer Parkposition geführt und dort abgestellt wird. Der automatische Parkvorgang umfasst ferner, dass das Fahrzeug von der Parkposition zu einer Abholposition fahrer- oder führerlos geführt wird und dort abgestellt wird. Eine Abgabeposition bezeichnet eine Position, an welcher das Fahrzeug von einer Person für die Durchführung eines automatischen Parkvorgangs abgestellt werden soll. Eine Abholposition bezeichnet eine Position, an welcher eine Person das Fahrzeug nach dem Ende des automatischen Parkvorgangs abholen soll. Ein automatischer Parkvorgang kann als ein AVP-Vorgang bezeichnet werden. "AVP" steht für "automated valet parking" und kann mit "automatischer Parkvorgang" bezeichnet werden.

Dass das Fahrzeug führerlos fährt, bedeutet oder heißt, dass das Fahrzeug nicht von einem menschlichen Fahrer oder menschlichen Fahrzeugführer gesteuert oder geführt wird. Eine führerlose Fahrt umfasst zum Beispiel, dass das Fahrzeug ferngesteuert wird. Dies bedeutet zum Beispiel, dass Fernsteuerungsbefehle an das Fahrzeug gesendet werden. Eine führerlose Fahrt umfasst zum Beispiel, dass das Fahrzeug autonom, also selbstständig, fährt. Zum Beispiel sind Mischformen vorgesehen, das heißt, dass das Fahrzeug eine Teilstrecke ferngesteuert wird und eine andere Teilstrecke autonom fährt.

Zum Beispiel ist vorgesehen, dass dem Fahrzeug eine Zielposition innerhalb des Parkplatzes übermittelt wird, wobei das Fahrzeug dann zu dieser Zielposition autonom, also selbstständig, fährt. Das Fahrzeug navigiert zum Beispiel zu der Zielposition basierend auf einer digitalen Karte des Parkplatzes. Diese digitale Karte wird dem Fahrzeug zum Beispiel über ein Kommunikationsnetzwerk übermittelt. Allgemein werden zum Beispiel dem Fahrzeug Informationen über das Kommunikationsnetzwerk übermittelt, die relevant für eine autonome Fahrt innerhalb des Parkplatzes sind. Das Fahrzeug fährt dann basierend auf diesen Informationen autonom innerhalb des Parkplatzes, insbesondere zur Zielposition. Solche Informationen umfassen zum Beispiel: Positionen von weiteren Fahrzeugen, Geschwindigkeitsdaten von weiteren Fahrzeugen, eine vom Fahrzeug abzufahrende Solltrajektorie.

Es ist vorgesehen, dass das Überprüfen ein Prüfen umfasst, ob eine weitere Notstoppanforderung und/oder ein anderes Notstoppsignal vorliegt respektive vorliegen, wobei nur dann das Notstoppsignal erzeugt wird, wenn eine weitere Notstoppanforderung und/oder ein anderes Notstoppsignal vorliegt respektive vorliegen.

Dadurch wird insbesondere der technische Vorteil bewirkt, dass das Überprüfen effizient durchgeführt werden kann. So kann zum Beispiel in vorteilhafter Weise sichergestellt werden, dass es zuvor zwei Notstoppanforderungen und/oder zwei Notstoppsignale aus unterschiedlichen Quellen geben muss, bevor ein Notstoppsignal erzeugt wird, ansprechend auf welchen das Fahrzeug führerlos anhält.

Nach einer Ausführungsform ist vorgesehen, dass die Notstoppanforderung über ein Kommunikationsnetzwerk an das Fahrzeug gesendet wird.

Dadurch wird insbesondere der technische Vorteil bewirkt, dass das Fahrzeug in die Lage versetzt wird, die Überprüfung selbst durchzuführen. Dies ist besonders sinnvoll, da das Fahrzeug schließlich den Notstopp, also das Anhalten, durchführen muss.

Nach einer Ausführungsform ist vorgesehen, dass die weitere Notstoppanforderung und/oder das andere Notstoppsignal über das Kommunikationsnetzwerk an das Fahrzeug gesendet werden.

Dadurch wird insbesondere der technische Vorteil bewirkt, dass dem Fahrzeug effizient signalisiert werden kann, dass noch eine weitere Notstoppanforderung respektive ein anderes Notstoppsignal vorliegt respektive vorliegen, sodass dann, wenn das Fahrzeug selbst eine Notstoppanforderung erzeugt hat, das Fahrzeug nun effizient entscheiden kann, dass das Anhalten notwendig ist, insofern zusätzlich zur selbsterzeugten Notstoppanforderung eine weitere Notstoppanforderung respektive ein anderes Notstoppsignal vorliegt respektive vorliegen, was ein Zeichen dafür ist, dass ein Anhalten notwendig ist.

Erfindungsgemäß ist vorgesehen, dass das Überprüfen mittels des Fahrzeugs respektive eines fahrzeugexternen Parkplatzverwaltungsservers durchgeführt wird.

Dadurch wird insbesondere der technische Vorteil bewirkt, dass die Entscheidung darüber, ob das Anhaften notwendig ist, derjenige trifft, der auch die getroffene Entscheidung umsetzen muss, wenn das Fahrzeug überprüft. Insbesondere wenn der Parkplatzverwaltungsserver überprüft, werden in vorteilhafter Weise die Ressourcen des Parkplatzverwaltungsservers effizient genutzt. Dieser ist häufig technisch besser ausgerüstet als eine fahrzeuginterne Überprüfungseinrichtung und kann somit die Überprüfung schneller und effizienter durchführen. Insbesondere stehen dem Parkplatzverwaltungsserver in der Regel mehr Informationsquellen zur Verfügung, die für die Überprüfung genutzt werden können, als dem Fahrzeug. Solche Informationsquellen sind zum Beispiel Umfeidsensoren, die innerhalb des Parkplatzes angeordnet sind.

Erfindungsgemäß ist vorgesehen, dass die Notstoppanforderung vom Fahrzeug aufgrund einer vom Fahrzeug erkannten Gefahrenlage selbst erzeugt wird respektive vom Parkplatzverwaltungsserver aufgrund einer vom Parkplatzverwaltungsserver erkannten Gefahrenlage selbst erzeugt wurde, wobei das Überprüfen umfasst, dass das Fahrzeug respektive der Parkplatzverwaltungsserver die erkannte Gefahrenlage überprüft, ob das Anhalten notwendig ist.

Dadurch wird insbesondere der technische Vorteil bewirkt, dass eine erkannte Gefahrenlage effizient überprüft werden kann.

Eine Gefahrenlage umfasst zum Beispiel eine drohende Kollision mit einem Objekt. Ein solches Objekt ist zum Beispiel ein weiteres Fahrzeug, eine Infrastruktur des Parkplatzes oder eine Person. Eine Gefahrenlage bedeutet also insbesondere, dass sich ein Objekt im Umfeld des Fahrzeugs befindet, wobei eine Kollision mit diesem Objekt droht.

Das Fahrzeug erkennt die Gefahrenlage erfindungsgemäß mittels seiner Umfeldsensorik. Eine Umfeldsensorik umfasst einen oder mehrere Umfeldsensoren. Ein Umfeldsensor ist zum Beispiel einer der folgenden Umfeldsensoren: Videosensor, Lasersensor, Ultraschallsensor, Lidarsensor, Magnetsensor oder Radarsensor.

Das Erkennen der Gefahrenlage umfasst also insbesondere eine Umfelderfassung mittels der Umfeldsensorik des Fahrzeugs. Das erfasste Umfeld wird dann insbesondere auf mögliche Gefahrenlagen analysiert. Bei dieser Analyse werden insbesondere Geschwindigkeitsdaten und Positionsdaten des Fahrzeugs berücksichtigt.

Der Parkplatzverwaltungsserver erkennt die Gefahrenlage nach einer Ausführungsform mittels einer Umfeldsensorik, die innerhalb des Parkplatzes angeordnet sind. Eine Umfeldsensorik umfasst einen oder mehrere Umfeldsensoren. Ein Umfeldsensor ist zum Beispiel einer der folgenden Umfeidsensoren: Videosensor, Lasersensor, Ultraschallsensor, Lidarsensor, Magnetsensor oder Radarsensor.

Das Erkennen der Gefahrenlage umfasst also insbesondere eine Umfelderfassung mittels des oder der innerhalb des Parkplatzes angeordneten Umfeldsensoren. Das erfasste Umfeld wird dann insbesondere auf mögliche Gefahrenlagen analysiert. Bei dieser Analyse werden insbesondere Geschwindigkeitsdaten und Positionsdaten des Fahrzeugs berücksichtigt.

Die Umfeldsensorik des Fahrzeugs kann als fahrzeuginterne Umfeldsensorik bezeichnet werden. Die Umfeldsensorik, die innerhalb des Parkplatzes angeordnet ist, kann als fahrzeugexterne Umfeldsensorik oder parkplatzeigene Umfeldsensorik bezeichnet werden.

Nach einer Ausführungsform ist vorgesehen, dass die Gefahrenlage basierend auf einer ersten Umfelderfassung eines ersten Umfeldsensors erkannt wurde, wobei das Überprüfen der erkannten Gefahrenlage basierend auf einer zweiten Umfelderfassung eines zweiten Umfeldsensors durchgeführt wird, um die erste und die zweite Umfelderfassung gegeneinander zu plausibilisieren.

Dadurch wird insbesondere der technische Vorteil bewirkt, dass das Überprüfen effizient durchgeführt werden kann. Insbesondere können so zum Beispiel Fehlfunktionen oder Fehlerfassungen des ersten Umfeldsensors kompensiert oder erkannt werden. Denn sofern der zweite Umfeldsensor ebenfalls eine Situation erkennt, in der ein Anhalten notwendig ist, so kann mit einer größeren Wahrscheinlichkeit davon ausgegangen werden, dass ein Anhalten wirklich notwendig ist, als wenn nur ein Umfeldsensor verwendet werden würde. Das Plausibilisieren umfasst zum Beispiel ein Prüfen, ob Objekte, die gemäß der ersten Umfelderfassung im Umfeld erkannt wurden, auch basierend auf der zweiten Umfelderfassung erkannt werden können.

Der erste Umfeldsensor und der zweite Umfeldsensor sind zum Beispiel Umfeldsensoren einer Umfeldsensorik des Fahrzeugs. Mittels einer solchen Umfeldsensorik erfasst das Fahrzeug sein Umfeld. Entsprechend dem erfassten Umfeld werden dann Umfelddaten, also zum Beispiel erste Umfelddaten (die Umfelddaten des ersten Umfeldsensors und zweite Umfelddaten (die Umfelddaten des zweiten Umfeldsensors) gebildet, die analysiert werden dahingehend, ob ein Anhalten notwendig ist oder nicht.

Analog gilt dies für eine parkplatzeigene Umfeldsensorik. So sind der erste und der zweite Umfeldsensor Umfeldsensoren der parkplatzeigenen Umfeldsensorik.

Nach einer Ausführungsform ist der erste Umfeldsensor ein Umfeldsensor einer fahrzeuginternen Umfeldsensorik und der zweite Umfeldsensor ist ein Umfeldsensor einer parkplatzeigenen Umfeldsensorik oder umgekehrt.

Das heißt, dass zum Beispiel die Gefahrenlage vom Fahrzeug erkannt wurde und dann vom Parkplatzverwaltungsserver überprüft wird oder umgekehrt. Bei erkannter Gefahrenlage empfängt der Parkplatzverwaltungsserver vom Fahrzeug eine Notstoppanforderung, die dann mittels des Parkplatzverwaltungsservers überprüft wird, wobei bei positiver Überprüfung ein Notstoppsignal vom Parkplatzverwaltungsserver an das Fahrzeug über das Kommunikationsnetzwerk gesendet wird.

Das heißt, dass zum Beispiel die Gefahrenlage vom Parkplatzverwaltungsserver erkannt wurde und dann vom Fahrzeug überprüft wird oder umgekehrt. Bei erkannter Gefahrenlage sendet der Parkplatzverwaltungsserver an das Fahrzeug eine Notstoppanforderung, die dann mittels des Fahrzeugs überprüft werden kann respektive wird, wobei bei positiver Überprüfung ein Notstoppsignal vom Fahrzeug selbst erzeugt werden kann respektive wird.

In einer Ausführungsform ist vorgesehen, dass, wenn die Überprüfung der erkannten Gefahrenlage basierend auf der zweiten Umfelderfassung ergibt, dass ein Anhalten nicht notwendig ist, sowohl der erste als auch der zweite Umfeldsensor erneut eine jeweilige Umfelderfassung durchführen, so dass basierend auf der jeweiligen erneuten Umfelderfassung geprüft wird, ob ein Anhalten notwendig ist, wobei, wenn das jeweilige Prüfen der erneuten Umfelderfassungen zu unterschiedlichen Ergebnissen kommt, das Notstoppsignal erzeugt wird. Dadurch wird insbesondere der technische Vorteil bewirkt, dass eine Sicherheit weiter erhöht werden kann. Denn durch die erneute Umfelderfassung mit erneuter Prüfung können in vorteilhafter Weise effizient eventuelle Fehler in den Umfeldsensoren erkannt werden. Insbesondere können so Situationen effizient erkannt werden, die schwer dahingehend zu analysieren sind, ob nur eine Gefahrenlage vorliegt oder nicht, die ein Anhalten notwendig macht oder nicht. Solch unklare Situationen können in der Regel zu unterschiedlichen Ergebnissen führen. In unklaren Situationen ist es aus Sicherheitsgründen sinnvoller anzuhalten, was daher erfindungsgemäß so vorgesehen ist.

Unterschiedliche Ergebnisse bedeuten, dass eine Prüfung ergeben hat, dass ein Anhalten notwendig ist, und dass eine andere Prüfung ergeben hat, dass ein Anhalten nicht notwendig ist.

Sofern beide Prüfungen zum gleichen Ergebnis kommen, dass ein Anhalten notwendig ist, wird das Notstoppsignal erzeugt.

Sofern beide Prüfungen zum gleichen Ergebnis kommen, dass ein Anhalten nicht notwendig ist, wird kein Notstoppsignal erzeugt.

Durch die erneute Prüfung ist also sowohl Komfort gegeben (nicht bei jeder Notstoppanforderung sofort anhalten, ohne diese zu überprüfen) als auch Sicherheit gegeben (erneute Prüfung der Situation mit Anhalten, wenn die Umfelderfassungsanalysen zu unterschiedlichen Ergebnissen kommen).

Der erste und der zweite Umfeldsensor sind zum Beispiel gleich ausgebildet oder unterschiedlich ausgebildet. So kann zum Beispiel der erste Umfeldsensor ein Radarsensor sein. Der zweite Umfeldsensor ist zum Beispiel ein Videosensor. Zum Beispiel erfasst die Umfeldsensorik zwei Radarsensoren. Hier wäre dann der erste Umfeldsensor ein Radarsensor und der zweite Umfeldsensor wäre ein Radarsensor. Gleiches gilt für Videosensoren.

Nach einer Ausführungsform ist vorgesehen, dass die Vorrichtung zum Betreiben eines Fahrzeugs eingerichtet oder ausgebildet ist, das Verfahren zum Betreiben eines Fahrzeugs aus- oder durchzuführen. Technische Funktionalitäten der Vorrichtung zum Betreiben eines Fahrzeugs ergeben sich analog aus entsprechenden technischen Funktionalitäten des Verfahrens zum Betreiben eines Fahrzeugs und umgekehrt. Ausführungen, die im Zusammenhang mit der Vorrichtung zum Betreiben eines Fahrzeugs gemacht sind, gelten analog für Ausführungsformen betreffend das Verfahren zum Betreiben eines Fahrzeugs und umgekehrt.

Nach einer Ausführungsform ist vorgesehen, dass eine Notstoppanforderung mittels eines Parkplatzverwaltungsservers des Parkplatzes von einem Teilnehmer eines Kommunikationsnetzwerks über das Kommunikationsnetzwerk empfangen wird, wobei die fahrzeugexterne Überprüfung mittels des Parkplatzverwaltungsservers durchgeführt wird, der bei positiver Überprüfung das Notstoppsignal erzeugt und an das führerlos fahrende Fahrzeug über ein Kommunikationsnetzwerk sendet.

Dadurch wird insbesondere der technische Vorteil bewirkt, dass die Überprüfung effizient durchgeführt werden kann. Denn in der Regel weist ein Parkplatzverwaltungsserver größere Rechenkapazitäten auf als eine Verarbeitungseinrichtung im Fahrzeug selbst, die entscheiden soll, ob das Anhalten notwendig ist oder nicht. Üblicherweise stehen dem Parkplatzverwaltungsserver mehr Informationen für das Überprüfen zur Verfügung als dem Fahrzeug, sodass der Parkplatzverwaltungsserver das Überprüfen besonders effizient und effektiv durchführen kann. Ein Kommunikationsnetzwerk im Sinne der vorliegenden Erfindung umfasst insbesondere ein WLAN-Kommunikationsnetzwerk und/oder ein Mobilfunknetzwerk und/oder ein Kommunikationsnetzwerk nach dem LoRa-Standard. "LoRa" steht für "Low Power Wide-Range Communication". Das Kommunikationsnetzwerk umfasst somit nach einer Ausführungsform ein LoRa-Kommunikationsnetzwerk.

In einer anderen Ausführungsform wird respektive ist eine Kommunikation über das Kommunikationsnetzwerk verschlüsselt.

Die Formulierung "respektive" umfasst insbesondere die Formulierung "und/oder".

Das Notstoppsignal, weiches nach der Überprüfung erzeugt wird, umfasst nach einer Ausführungsform eine Kennung oder eine Markierung, dass eine Überprüfung stattgefunden hat. So weiß in vorteilhafter Weise ein Empfänger des Notstoppsignals, hier insbesondere das Fahrzeug, dass eine Überprüfung bereits stattgefunden hat, so dass zum Beispiel das Fahrzeug unmittelbar ansprechend auf das Notstoppsignal anhält, ohne zuvor selbst noch eine eigene Überprüfung durchzuführen.

Nach einer Ausführungsform ist vorgesehen, dass bei negativer Überprüfung eine neue Überprüfung durchgeführt wird. Sofern die neue Überprüfung auch negativ ist, wird ein Notstoppsignal erzeugt,

Die Erfindung wird im Folgenden anhand von bevorzugten Ausführungsbeispielen näher erläutert. Hierbei zeigen
- Fig. 1: ein Ablaufdiagramm eines Verfahrens zum Betreiben eines Fahrzeugs,
- Fig. 2: eine Vorrichtung zum Betreiben eines Fahrzeugs,
- Fig. 3: ein Fahrzeug,
- Fig. 4: ein Ablaufdiagramm eines Verfahrens zum Betreiben eines Parkplatzes für Fahrzeuge,
- Fig. 5: einen Parkplatz und
- Fig. 6: schematisch ein Szenario, in welchem das erfindungsgemäße Konzept verwendet wird.

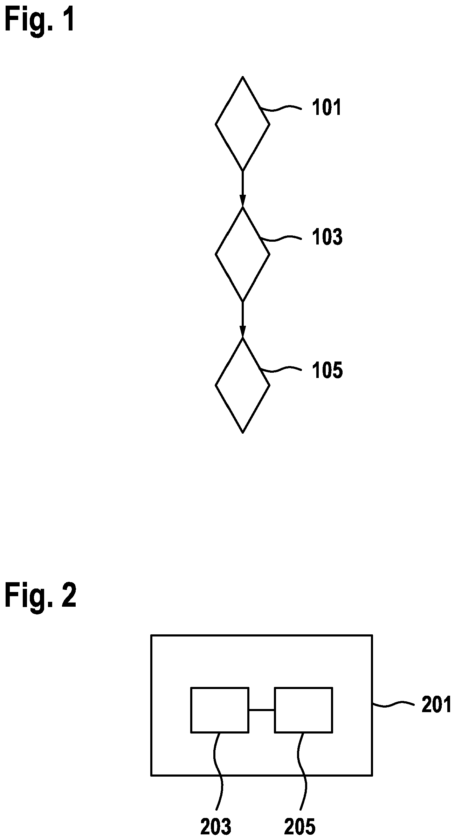

Fig. 1 zeigt ein Ablaufdiagramm eines Verfahrens zum Betreiben eines Fahrzeugs.

Es ist gemäß einem Schritt 101 vorgesehen, dass bei einer führerlosen Fahrt des Fahrzeugs innerhalb eines Parkplatzes und bei Vorliegen einer Notstoppanforderung, dass das führerlos fahrende Fahrzeug anhalten soll, überprüft wird, ob das Anhalten notwendig ist. Sofern im Überprüfungsschritt 101 festgestellt wird, dass das Anhalten notwendig ist, so wird gemäß einem Schritt 103 ein Notstoppsignal erzeugt. Hierbei ist vorgesehen, dass ausschließlich bei positiver Überprüfung ein Notstoppsignal erzeugt wird. Das heißt also, dass die Notstoppanforderung insbesondere bestätigt werden muss. Dies zum Beispiel mittels einer weiteren Notstoppanforderung und/oder mittels eines anderen Notstoppsignals. Das heißt also, dass nur wenn die Notstoppanforderung bestätigt wird, das Notstoppsignal erzeugt wird. Das Notstoppsignal kann insofern allgemein als ein bestätigtes Notstoppsignal bezeichnet werden.

In einem Schritt 105 ist vorgesehen, dass das Fahrzeug ansprechend auf das Notstoppsignal führerlos anhält. Zum Beispiel wird das Notstoppsignal an das Fahrzeug über ein Kommunikationsnetzwerk gesendet. Ansprechend auf den Empfang des Notstoppsignals hält das Fahrzeug an. Zum Beispiel ist vorgesehen, dass das Notstoppsignal fahrzeugintern erzeugt wird. Dies beispielsweise, da das Fahrzeug eine selbsterkannte Gefahrenlage erkannt und nochmals geprüft, also überprüft, hat, sodass das Fahrzeug entschieden hat, dass das Anhalten notwendig ist.

Fig. 2 zeigt eine Vorrichtung 201 zum Betreiben eines Fahrzeugs.

Die Vorrichtung 201 umfasst eine Notstoppeinrichtung 203, die ausgebildet ist, das Fahrzeug bei einer führerlosen Fahrt des Fahrzeugs innerhalb eines Parkplatzes ansprechend auf ein Notstoppsignal anzuhalten.

Die Vorrichtung 201 umfasst ferner eine Überprüfungseinrichtung 205, die ausgebildet ist, bei Vorliegen einer Notstoppanforderung, dass das Fahrzeug anhalten soll, zu überprüfen, ob das Anhalten notwendig ist, wobei die Überprüfungseinrichtung 205 ausgebildet ist, ausschließlich bei positiver Überprüfung ein Notstoppsignal für die Notstoppeinrichtung 203 zu erzeugen.

Das heißt also, dass die Überprüfungseinrichtung 205 zum Beispiel eine erkannte Gefahrenlage dahingehend überprüft, ob die der Gefahrenlage zugrunde liegende Situation ein Anhalten notwendig macht. Erst dann erzeugt die Überprüfungseinrichtung 205 ein Notstoppsignal für die Notstoppeinrichtung 203, ansprechend auf welchen die Notstoppeinrichtung 203 das Fahrzeug anhält.

Das heißt also insbesondere, dass eine Notstoppanforderung für sich alleine noch nicht ausreicht, damit das Fahrzeug anhält. Es bedarf vielmehr einer Bestätigung dieser Notstoppanforderung. Diese Bestätigung kann zum Beispiel eine weitere Notstoppanforderung und/oder ein weiteres Notstoppsignal umfassen. Auch ein weiteres Notstoppsignal alleine reicht nicht aus, dass das Fahrzeug anhält.

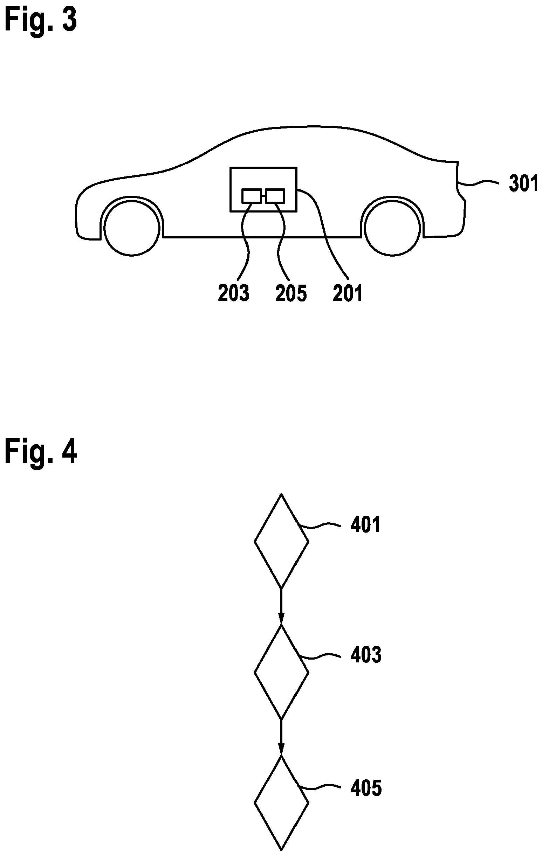

Fig. 3 zeigt ein Fahrzeug 301.

Das Fahrzeug 301 ist für eine führerlose Fahrt innerhalb eines Parkplatzes ausgebildet. Das Fahrzeug 301 umfasst die Vorrichtung 201 gemäß Fig. 2.

Fig. 4 zeigt ein Ablaufdiagramm eines Verfahrens zum Betreiben eines Parkplatzes für Fahrzeuge.

Gemäß einem Schritt 401 ist vorgesehen, dass bei einer führerlosen Fahrt eines Fahrzeugs innerhalb des Parkplatzes und bei Vorliegen einer Notstoppanforderung, dass das Fahrzeug anhalten soll, fahrzeugextern überprüft wird, ob das Anhalten notwendig ist. Das heißt also, dass die Überprüfung nicht im Fahrzeug stattfindet, sondern fahrzeugextern, zum Beispiel mittels eines Parkplatzverwaltungsservers des Parkplatzes.

In einem Schritt 403 ist vorgesehen, dass ausschließlich bei positiver Überprüfung ein Notstoppsignal erzeugt wird. Das heißt also, dass der Schritt 403 nur dann durchgeführt wird, wenn die Überprüfung gemäß Schritt 401 ergeben hat, dass das Anhalten notwendig ist.

Das Notstoppsignal wird in einem Schritt 405 an das führerlos fahrende Fahrzeug über ein Kommunikationsnetzwerk gesendet. Ansprechend auf einen Empfang des Notstoppsignals hält dann insbesondere das führerlos fahrende Fahrzeug an.

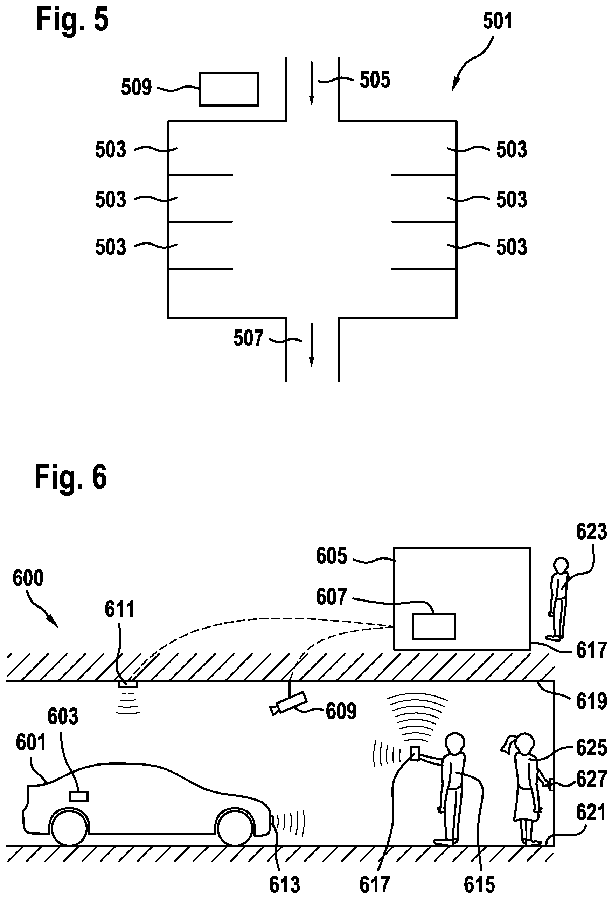

Fig. 5 zeigt einen Parkplatz 501.

Der Parkplatz 501 umfasst mehrere Parkflächen 503, auf welchen Fahrzeuge parken können. Der Parkplatz 501 umfasst eine Einfahrt 505 und eine Ausfahrt 507.

Der Parkplatz 501 umfasst einen Parkplatzverwaltungsserver 509, der ausgebildet ist, das Verfahren zum Betreiben eines Parkplatzes für Fahrzeuge aus- oder durchzuführen.

Der Parkplatzverwaltungsserver 509 empfängt zum Beispiel von einem Teilnehmer eines Kommunikationsnetzwerks über das Kommunikationsnetzwerk eine Notstoppanforderung. Zum Beispiel hat dieser Teilnehmer, der sich innerhalb des Parkplatzes 501 befindet, eine Situation für ein führerlos fahrendes Fahrzeug gesehen, welche zum Beispiel zu einer Kollision des Fahrzeugs mit einem weiteren Objekt führen könnte. Insofern fordert er ein Anhalten des Fahrzeugs seitens des Parkplatzverwaltungsservers an.

Erfindungsgemäß ist nun vorgesehen, dass diese Notstoppanforderung überprüft wird. Es wird also mittels des Parkplatzverwaltungsservers 509 überprüft, ob ein Anhalten notwendig ist. Zum Beispiel überprüft der Parkplatzverwaltungsserver 509 die momentane Situation, in welcher sich das Fahrzeug befindet, dahingehend, ob eine Kollision eine vorbestimmte Wahrscheinlichkeit aufweist respektive eine Wahrscheinlichkeit aufweist, die größer als ein vorbestimmter Wahrscheinlichkeitsschwellwert ist. Sofern dies der Fall sein sollte, ist dies für den Parkplatzverwaltungsserver 509 ein Zeichen dafür, dass das Anhalten notwendig ist, da es ansonsten zu einer Kollision kommen könnte. Insofern erzeugt der Parkplatzverwaltungsserver 509 ein Notstoppsignal und sendet dieses dann an das führerlos fahrende Fahrzeug über das Kommunikationsnetzwerk. Andernfalls wird kein Notstoppsignal erzeugt und insofern wird auch kein Notstoppsignal über das Kommunikationsnetzwerk an das führerlos fahrende Fahrzeug gesendet. Das führerlos fahrende Fahrzeug wird dann in diesem Fall seine führerlose Fahrt fortsetzen. Die Notstoppanforderung führt dann also nicht zum Ziel, dass das führerlos fahrende Fahrzeug anhält.

Insofern ist der Parkplatz 501 ausgebildet, das Verfahren zum Betreiben eines Parkplatzes für Fahrzeuge aus- oder durchzuführen.

Fig. 6 zeigt ein Szenario in einer schematischen und vereinfachten Darstellung, in welchem das erfindungsgemäße Konzept eingesetzt wird.

Gezeigt ist ein Parkplatz 600. Auf einer Fahrspur 621 des Parkplatzes 600 fährt ein Fahrzeug 601 führerlos, zum Beispiel ferngesteuert oder autonom. Das Fahrzeug 601 umfasst ein Programm 603, weiches zum Beispiel Schritte zur Durchführung des Verfahrens zum Betreiben eines Fahrzeugs umfasst, wenn das Programm 603 (was ein Computerprogramm ist) auf einem Computer, insbesondere auf einer Vorrichtung zum Betreiben eines Fahrzeugs, ausgeführt wird. Insofern ist nach einer Ausführungsform vorgesehen, dass das Fahrzeug 601 die Vorrichtung 201 der Fig. 2 umfasst.

Das Fahrzeug 601 umfasst eine Umfeldsensorik 613, die zum Beispiel einen Radarsensor umfassen kann. Die Umfeldsensorik 613 erfasst zum Beispiel eine Person 615, die sich innerhalb des Fahrweges des Fahrzeugs 601 befindet. Sofern also die Person 615 nicht ausweichen würde oder sofern das Fahrzeug 601 nicht ausweichen oder anhalten würde, würde es zu einer Kollision zwischen dem Fahrzeug 601 und der Person 615 kommen.

Das Fahrzeug 601 erkennt somit eine Gefahrenlage. Allerdings reicht diese Gefahrenlage alleine für sich noch nicht aus, damit das Fahrzeug 601 anhält. Es bedarf zusätzlich noch einer Bestätigung, dass diese erkannte Gefahrenlage wirklich ein Anhalten notwendig macht.

Eine solche Bestätigung kann zum Beispiel von der Person 615 selbst kommen. Die Person 615 führt ein mobiles Endgerät 617 mit sich. Die Person 615 erkennt, dass das Fahrzeug 601 auf sie zufährt und es somit zu einer Kollision kommen könnte. Die Person 615 übermittelt somit eine Notstoppanforderung mittels des Endgeräts 617 an das Fahrzeug 601.

Somit hat das Fahrzeug 601 folgende Informationen: die erkannte Gefahrenlage und die Notstoppanforderung seitens der Person 615. Somit ist also die erkannte Gefahrenlage durch die Notstoppanforderung der Person 615 bestätigt worden. Das Fahrzeug 601 wird daraufhin anhalten.

Die Person 615 ist zum Beispiel der Fahrer des Fahrzeugs 601, der sein Fahrzeug 601 verlassen hat, sich aber noch in seiner Nähe befindet. Das Fahrzeug 601 ist zum Beispiel im Rahmen eines automatischen Parkvorgangs unterwegs und wurde zum Beispiel von seinem Fahrer auf einer Abgabeposition abgestellt, von welcher das Fahrzeug 601 sich nun auf seinem Weg zu einer Parkposition befindet.

Die Person 615 kann zum Beispiel eine Notstoppanforderung über ein Kommunikationsnetzwerk an einen Parkplatzverwaltungsserver 605 übermitteln. Der Parkplatzverwaltungsserver 605 umfasst ein Programm 607, welches zum Beispiel Schritte zur Ausführung oder Durchführung des Verfahrens zum Betreiben eines Parkplatzes umfasst. Der Parkplatzverwaltungsserver 605 empfängt diese Notstoppanforderung und kann daraufhin zum Beispiel überprüfen, ob die vorliegende Situation ein Anhalten notwendig macht. Hierfür ist zum Beispiel vorgesehen, dass der Parkplatzverwaltungsserver 605 mittels einer Videokamera 609 die vorliegende Situation erfasst. Die Videokamera 609 ist an einer Decke 619 des Parkplatzes 600 angebracht. Obwohl die Zeichnung gemäß Fig. 6 vermuten lassen könnte, dass die Videokamera 609 nur das Fahrzeug 601 erfasst, hat die Kamera 609 ebenfalls die Person 615 erfasst. Dies zum Beispiel dadurch, dass die Kamera 609 schwenk- oder drehbar an der Decke 619 angebracht ist.

Der Parkplatzverwaltungsserver 605 erkennt somit, dass ein Anhalten notwendig ist, und erzeugt und sendet ein Notstoppsignal an das Fahrzeug 601. Dies mittels einer Kommunikationsschnittstelle 611, die zum Beispiel eine WLAN-Basisstation ist. Die Kommunikationsschnittstelle 611 ist ebenfalls an der Decke 619 des Parkplatzes 600 angebracht.

Somit stehen auch gemäß diesem Ablauf dem Fahrzeug 601 zwei Informationen zur Verfügung: die selbsterkannte Gefahrenlage und das Notstoppsignal des Parkplatzverwaltungsservers 605. Insofern ist das ursprünglich erzeugte Notstoppsignal vom Fahrzeug 601 durch das weitere Notstoppsignal des Parkplatzverwaltungsservers 605 bestätigt worden. Das Fahrzeug 601 wird somit anhalten.

Ferner ist zum Beispiel vorgesehen, dass ein Fußgänger 625 die drohende Kollision zwischen dem Fahrzeug 601 und der Person 615 erkannt hat und einen Schalter 627 betätigt, um einen Notstopp seitens des Parkplatzverwaltungsservers 605 anzufordern. Diese Anforderung wird analog zum Endgerät 617 der Person 615 zum Parkplatzverwaltungsserver 605 übermittelt. Die folgenden Schritte sind analog.

### Ferner ist zum Beispiel folgender Ablauf vorgesehen:

Ein Operator oder ein Bediener 623 des Parkplatzes 600 erkennt mittels des Parkplatzverwaltungsservers 605 über die Videokamera 609, dass eine Kollision zwischen dem Fahrzeug 601 und der Person 615 bevorstehen könnte. Er sendet daraufhin ein Notstoppsignal über die Kommunikationsschnittstelle 611 an das Fahrzeug 601.

Das Fahrzeug 601 empfängt dieses Notstoppsignal, wird aber noch nicht anhalten. Denn zunächst muss das Notstoppsignal bestätigt werden, bevor das Fahrzeug 601 tatsächlich anhält. Diese Bestätigung kann zum Beispiel umfassen, dass das Fahrzeug 601 mittels seiner Umfeldsensorik 613 die Person 615 erfasst und zum Ergebnis kommt, dass eine Kollision wahrscheinlich ist. Die Bestätigung kann zum Beispiel umfassen, dass das Fahrzeug 601 eine Notstoppanforderung empfängt, die von der Person 615 mittels des Endgeräts 617 an das Fahrzeug 601 gesendet wurde.

Zusammenfassend stellt die Erfindung insbesondere ein technisches Konzept bereit, welches eine Akzeptanz für das Vorsehen eines Notstopps für Fahrzeuge, die sich innerhalb eines Parkplatzes führer- oder fahrerlos bewegen, erhöht wird. Ein erfindungsgemäßer Grundgedanke ist insbesondere darin zu sehen, dass bei unklaren und/oder gefährlichen Situationen ein Notstopp (also ein Anhalten) nur auf einem bestätigten Signal ausgeführt wird. Das heißt also, dass ein Notstoppsignal alleine noch nicht ausreicht. Es bedarf noch einer Bestätigung für dieses Notstoppsignal, was insofern dann als ein bestätigtes Notstoppsignal bezeichnet werden kann.

Das heißt also, dass der Notstopp (das Anhalten) nicht sofort auf ein erstes Auslösesignal (Notstoppanforderung oder weiteres Notstoppsignal) einen Notstopp auslöst, sondern erst dann, wenn eine Überprüfung des ersten Signals mit mindestens einem weiteren Signal durchgeführt wird und der Notstopp nur dann ausgeführt wird, wenn es eine Bestätigung der vorliegenden Situation gibt dahingehend, dass es zum Beispiel zu einer Kollision kommen würde.

Die entsprechenden Auslösesignale können dabei zum Beispiel vom Fahrzeug, vom Parkplatzverwaltungssystem, vom Fahrer oder von einem Fußgänger kommen. Vorzugsweise wird eine Überprüfung im Fahrzeug selbst ausgeführt, da das Fahrzeug den Notstopp selbst ausführen muss.

Situationen oder Szenarien, in denen ein Anhalten angefordert wird respektive in denen ein Notstoppsignal an das Fahrzeug gesendet wird respektive in denen das Fahrzeug selbst ein Notstoppsignal erzeugt und nach Überprüfung ansprechend darauf anhält, sind insbesondere eine oder mehrere der folgenden Situationen oder Szenarien:
Das Fahrzeug erkennt eine unklare und/oder erkannte Problemsituation. Solche Situationen sind zum Beispiel folgende Situationen:
Ein Fußgänger kreuzt unvermittelt den Fahrtweg des Fahrzeugs, zum Beispiel kommt der Fußgänger zwischen zwei Fahrzeugen hervor.

Ein Fahrzeug kreuzt unvermittelt den Fahrtweg des Fahrzeugs, kommt zum Beispiel aus einer Parklücke herausgefahren und hat das führerlos fahrende Fahrzeug nicht gesehen.

### Ein Kommunikationsproblem ist aufgetreten.

Das Parkplatzverwaltungssystem hat einen internen Fehler. Dieser interne Fehler kann nach einer Ausführungsform wie folgt erkannt werden. Das Parkplatzverwaltungssystem führt Checkroutinen und/oder redundante Berechnungsfunktionen durch. Damit werden Komponenten des Parkplatzverwaltungssystems und/oder das Parkplatzverwaltungssystem als Ganzes selbst überprüft. Zum Bespiel werden die Überwachungssensoren (zum Beispiel Kameras), also zum Beispiel die Umfeldsensoren, auf Funktionsfähigkeit überprüft, zum Beispiel auf ein eingefrorenes Bild und / oder ob überhaupt ein Signal von der Kamera (allgemein vom Umfeldsensor) kommt. Wenn auf diese Art und Weise festgestellt wird, dass ein Umfeldsensor nicht ordnungsgemäß funktioniert, so wird das als ein interner Fehler erkannt.

Wenn das Parkplatzverwaltungssystem einen Fehler erkennt, wird das Auftreten des Fehlers dem Fahrzeug über das Kommunikationsnetzwerk mitgeteilt, woraufhin das Fahrzeug, bevor es anhält, zum Beispiel abwartet, ob das Parkplatzverwaltungssystem auch wirklich explizit das Anhalten vom Fahrzeug anfordert. Das heißt, dass ein interner Fehler im Parkplatzverwaltungssystem für sich noch nicht ausreicht, dass das Fahrzeug bei Kenntnis des internen Fehlers anhält. Erst bei positiver Überprüfung, hier zum Beispiel das explizite Anfordern des Anhaltens seitens des Parkplatzverwaltungssystems, hält das Fahrzeug an.

Es ist nach einer Ausführungsform vorgesehen, dass das Parkplatzverwaltungssystem nach dem Erkennen des internen Fehlers ein Notstoppsignal an das Fahrzeug über das Kommunikationsnetzwerk sendet.

Das Fahrzeug hat einen internen Fehler. Dieser interne Fehler kann zum Beispiel analog zum Erkennen eines internen Fehlers im Parkplatzverwaltungssystem erkannt werden. Auch hier führt der interne Fehler des Fahrzeugs nur nach positiver Überprüfung zu einem Anhalten des Fahrzeugs.

Weiterhin können zum Beispiel Probleme an bzw. von verschiedenen Orten und/oder Menschen und/oder Produkten erkannt werden. Beispiele sind folgende:
Im Fahrzeug wird über fahrzeuginterne Sensorsysteme festgestellt, dass ein Fußgänger in den Fahrtweg läuft. Ein solch fahrzeuginternes Sensorsystem ist zum Beispiel eine Umfeldsensorik des Fahrzeugs.

Ein internes Programm, weiches also auf einem Computer des Fahrzeugs läuft, detektiert Probleme, zum Beispiel: keine Kommunikation zwischen dem Fahrzeug und dem Parkplatzverwaltungsserver und/oder keine Kommunikation zwischen dem Fahrzeug und einem weiteren Fahrzeug, einen internen Funktionsfehler (zum Beispiel funktioniert eine autonome Fahrfunktionalität nicht mehr oder nicht mehr korrekt), interne Probleme mit Komponenten (Fahrzeugsystemen, zum Beispiel die Bremse meldet einen Fehler).

Das interne Programm kann zum Beispiel eine Situation nicht eindeutig einschätzen, wie zum Beispiel, ob sich vielleicht Fußgänger im Fahrtweg befinden.

Im Parkplatzmanagement oder Parkplatzverwaltungssystem können zum Beispiel folgende Situationen auftreten:
Zunächst können ähnliche oder gleiche Situationen auftreten bezogen auf das Fahrzeug, nur, dass hier anstelle des Fahrzeugs das Parkplatzverwaltungssystem steht.

Ein Operator des Parkplatzes sieht ein Problem und will einen Notstopp für eines oder alle Fahrzeuge auslösen.

Der Fahrer, der noch in der Nähe ist, sieht ein Problem und will einen Notstopp für eines oder mehrere oder alle Fahrzeuge auslösen.

Der Fahrer kann einen solchen Notstopp zum Beispiel über sein Mobiltelefon direkt auslösen, indem er direkt an sein Fahrzeug ein Notstoppsignal sendet.

Insbesondere kann der Fahrer über sein Mobiltelefon eine entsprechende Notstoppanforderung an das Parkplatzverwaltungssystem senden, welches ansprechend darauf nach positiver Überprüfung ein Notstoppsignal an das Fahrzeug sendet.

Ein Passant, der in der Nähe ist, sieht ein Problem und will einen Notstopp eines oder mehrerer oder aller Fahrzeuge auslösen. Dies analog zum Fahrer über ein Mobiltelefon und mittels einer Notstoppanforderung, die an den Parkplatzverwaltungsserver gesendet wird.

Zum Beispiel umfasst der Parkplatz einen Notschalter, der bei Betätigung durch einen Passanten oder Nutzer eine Notstoppanforderung an den Parkplatzverwaltungsserver sendet, sodass dieser dann ansprechend auf den Empfang der Notstoppanforderung eine Überprüfung durchführt und erst nach positiver Überprüfung ein Notstoppsignal an das Fahrzeug sendet.

Allgemein lässt sich das erfindungsgemäße Konzept auf mehrere führerlos fahrende Fahrzeuge, die innerhalb des Parkplatzes fahren, übertragen, so dass auch diese Fahrzeuge erst, also ausschließlich, ansprechend auf ein überprüftes Notstoppsignal unmittelbar anhalten, also nur bei einer positiven Überprüfung, ob das Anhalten notwendig ist.

## Patentansprüche

1. Verfahren zum Betreiben eines Fahrzeugs (301, 601), wobei bei einer führerlosen Fahrt des Fahrzeugs (301, 601) innerhalb eines Parkplatzes (501, 600) und bei Vorliegen einer Notstoppanforderung, dass das führerlos fahrende Fahrzeug (301, 601) anhalten soll, überprüft (101) wird, ob das Anhalten notwendig ist, wobei ausschließlich bei positiver Überprüfung ein Notstoppsignal erzeugt (103) wird, ansprechend auf welches das Fahrzeug (301, 601) führerlos anhält (105), **dadurch gekennzeichnet, dass** das Überprüfen ein Prüfen umfasst, ob eine weitere Notstoppanforderung vorliegt, wobei nur dann das Notstoppsignal erzeugt wird, wenn eine weitere Notstoppanforderung vorliegt,
wobei das Überprüfen mittels des Fahrzeugs (301, 601) respektive eines fahrzeugexternen Parkplatzverwaltungsservers (509) durchgeführt wird und wobei die Notstoppanforderung vom Fahrzeug (301, 601) aufgrund einer vom Fahrzeug (301, 601) erkannten Gefahrenlage selbst erzeugt wird respektive vom Parkplatzverwaltungsserver (509, 605) aufgrund einer vom Parkplatzverwaltungsserver (509, 605) erkannten Gefahrenlage selbst erzeugt wurde, wobei das Überprüfen umfasst, dass das Fahrzeug (301, 601) respektive der Parkplatzverwaltungsserver (509, 605) die erkannte Gefahrenlage dahingehend überprüft, ob das Anhalten notwendig ist, wobei die Gefahrenlage basierend auf einer ersten Umfelderfassung eines ersten Umfeldsensors erkannt wurde, wobei das Überprüfen der erkannten Gefahrenlage basierend auf einer zweiten Umfelderfassung eines zweiten Umfeldsensors durchgeführt wird, um die erste und die zweite Umfelderfassung gegeneinander zu plausibilisieren, wobei der erste Umfeldsensor und der zweite Umfeldsensor Umfeldsensoren einer Umfeldsensorik (613) des Fahrzeugs sind oder der erste und der zweite Umfeldsensor Umfeldsensoren der parkplatzeigenen Umfeldsensorik (609) sind oder der erste Umfeldsensor ein Umfeldsensor einer fahrzeuginternen Umfeldsensorik (613) und der zweite Umfeldsensor ein Umfeldsensor einer parkplatzeigenen Umfeldsensorik (609) ist oder umgekehrt.

2. Verfahren nach Anspruch 1, wobei, wenn die Überprüfung der erkannten Gefahrenlage basierend auf der zweiten Umfelderfassung ergibt, dass ein Anhalten nicht notwendig ist, sowohl der erste als auch der zweite Umfeldsensor erneut eine jeweilige Umfelderfassung durchführen, so dass basierend auf der jeweiligen erneuten Umfelderfassung geprüft wird, ob ein Anhalten notwendig ist, wobei, wenn das jeweilige Prüfen der erneuten Umfelderfassungen zu unterschiedlichen Ergebnissen kommt, das Notstoppsignal erzeugt wird.

3. Vorrichtung (201) zum Betreiben eines Fahrzeugs (301, 601), umfassend eine Notstoppeinrichtung (203), die ausgebildet ist, das Fahrzeug (301, 601) bei
einer führerlosen Fahrt des Fahrzeugs (301, 601) innerhalb eines Parkplatzes (501, 600) ansprechend auf ein Notstoppsignal anzuhalten, und eine Überprüfungseinrichtung (205), die ausgebildet ist bei Vorliegen einer Notstoppanforderung, dass das Fahrzeug (301, 601) anhalten soll, zu überprüfen, ob das Anhalten notwendig ist, wobei die Überprüfungseinrichtung (205) ausgebildet ist, ausschließlich bei positiver Überprüfung ein Notstoppsignal für die Notstoppeinrichtung (203) zu erzeugen, **dadurch gekennzeichnet, dass** das Überprüfen ein Prüfen umfasst, ob eine weitere Notstoppanforderung vorliegt, wobei nur dann das Notstoppsignal erzeugt wird, wenn eine weitere Notstoppanforderung vorliegt
wobei das Überprüfen mittels des Fahrzeugs (301, 601) respektive eines fahrzeugexternen Parkplatzverwaltungsservers (509, 605) durchgeführt wird, wobei die Notstoppanforderung vom Fahrzeug (301, 601) aufgrund einer vom Fahrzeug (301, 601) erkannten Gefahrenlage selbst erzeugt wird respektive vom Parkplatzverwaltungsserver (509, 605) aufgrund einer vom Parkplatzverwaltungsserver (509, 605) erkannten Gefahrenlage selbst erzeugt wurde, wobei das Überprüfen umfasst, dass das Fahrzeug (301, 601) respektive der Parkplatzverwaltungsserver (509, 605) die erkannte Gefahrenlage überprüft, ob das Anhalten notwendig ist, und wobei die Gefahrenlage basierend auf einer ersten Umfelderfassung eines ersten Umfeldsensors erkannt wurde, wobei das Überprüfen der erkannten Gefahrenlage basierend auf einer zweiten Umfelderfassung eines zweiten Umfeldsensors durchgeführt wird, um die erste und die zweite Umfelderfassung gegeneinander zu plausibilisieren, wobei der erste Umfeldsensor und der zweite Umfeldsensor Umfeldsensoren einer Umfeldsensorik (613) des Fahrzeugs sind oder der erste und der zweite Umfeldsensor Umfeldsensoren der parkplatzeigenen Umfeldsensorik (609) sind oder der erste Umfeldsensor ein Umfeldsensor einer fahrzeuginternen Umfeldsensorik (613) und der zweite Umfeldsensor ein Umfeldsensor einer parkplatzeigenen Umfeldsensorik (609) ist oder umgekehrt.

4. Fahrzeug (301, 601), welches für eine führerlose Fahrt innerhalb eines Parkplatzes (501, 600) ausgebildet ist, wobei das Fahrzeug (301, 601) die Vorrichtung (201) nach Anspruch 3 umfasst.

5. Verfahren zum Betreiben eines Parkplatzes (501, 600) für Fahrzeuge (301, 601), die nach einem der Ansprüche 1 oder 2 betrieben werden, wobei bei einer führerlosen Fahrt eines Fahrzeugs (301, 601) innerhalb des Parkplatzes (501, 600) und bei Vorliegen einer Notstoppanforderung, dass das Fahrzeug (301, 601) anhalten soll, fahrzeugextern überprüft (401) wird, ob das Anhalten notwendig ist, wobei ausschließlich bei positiver Überprüfung ein Notstoppsignal erzeugt (403) und an das führerlos fahrende Fahrzeug (301, 601) über ein Kommunikationsnetzwerk gesendet (405) wird, wobei eine Notstoppanforderung mittels eines Parkplatzverwaltungsservers (509, 605) des Parkplatzes (501, 600) von einem Teilnehmer (617) eines Kommunikationsnetzwerks über das Kommunikationsnetzwerk empfangen wird, wobei die fahrzeugexterne Überprüfung mittels des Parkplatzverwaltungsservers (509, 605) durchgeführt wird, der bei positiver Überprüfung das Notstoppsignal erzeugt und an das führerlos fahrende Fahrzeug (301, 601) über ein Kommunikationsnetzwerk sendet, **dadurch gekennzeichnet, dass** das Notstoppsignal, welches nach der Überprüfung erzeugt wird, eine Kennung oder eine Markierung umfasst, dass eine Überprüfung stattgefunden hat, wobei der Parkplatzverwaltungsserver (509, 605) eine momentane Situation, in welcher sich das Fahrzeug (301, 601) befindet, dahingehend überprüft, ob eine Kollision eine vorbestimmte Wahrscheinlichkeit aufweist respektive eine Wahrscheinlichkeit aufweist, die größer als ein vorbestimmter Wahrscheinlichkeitsschwellwert ist, wobei, sofern dies der Fall sein sollte, dies für den Parkplatzverwaltungsserver (509, 605) ein Zeichen dafür ist, dass das Anhalten notwendig ist, da es ansonsten zu einer Kollision kommen könnte, wobei der Parkplatzverwaltungsserver (509, 605) insofern ein Notstoppsignal erzeugt und dieses dann an das führerlos fahrende Fahrzeug (301, 601) über das Kommunikationsnetzwerk sendet, andernfalls wird kein Notstoppsignal erzeugt und insofern wird auch kein Notstoppsignal über das Kommunikationsnetzwerk an das führerlos fahrende Fahrzeug (301, 601) gesendet.

6. Parkplatz (501, 600) für Fahrzeuge (301, 601), wobei der Parkplatz (501, 600) ausgebildet ist, das Verfahren nach Anspruch 5 durchzuführen.

7. Computerprogrammprodukt, umfassend Programmcode zur Durchführung des Verfahrens nach einem der Ansprüche 1 oder 2 und/oder 5, wenn das Computerprogramm auf einem Computer ausgeführt wird.

## Claims

1. Method for operating a vehicle (301, 601), wherein in the case of driverless driving of the vehicle (301, 601) within a carpark (501, 600) and when there is an emergency stop request that the vehicle (301, 601) which is driving in a driverless fashion is to stop, it is checked (101) whether the stopping is necessary, wherein an emergency stop signal is generated (103) only in the event of a positive check, in response to which the vehicle (301, 601) stops (105) in a driverless fashion, **characterized in that** the checking comprises testing as to whether there is a further emergency stop request, wherein the emergency stop signal is generated only when a further emergency stop request is present, wherein the checking is carried out by means of the vehicle (301, 601) or a vehicle-external carpark management server (509), and wherein the emergency stop request is generated by the vehicle (301, 601) itself on the basis of a dangerous situation detected by the vehicle (301, 601) or has been generated by the carpark management server (509, 605) itself on the basis of a dangerous situation detected by the carpark management server (509, 605), wherein the checking comprises the fact that the vehicle (301, 601) or the carpark management server (509, 605) checks the detected dangerous situation to determine whether the stopping is necessary, wherein the dangerous situation has been detected on the basis of a first surroundings sensing process of a first surroundings sensor, wherein the checking of the detected dangerous situation is carried out on the basis of a second surroundings sensing process of a second surroundings sensor, in order to check the plausibility of the first and second surroundings sensing processes with respect to one another, wherein the first surroundings sensor and the second surroundings sensor are surroundings sensors of a surroundings sensor system (613) of the vehicle, or the first and second surroundings sensors are surroundings sensors of the carpark's own surroundings sensor system (609), or the first surroundings sensor is a surroundings sensor of a vehicle-internal surroundings sensor system (613), and the second surroundings sensor is a surroundings sensor of a surroundings sensor system (609) of the actual carpark, or vice versa.

2. Method according to Claim 1, wherein when the checking of the detected dangerous situation on the basis of the second surroundings sensor system reveals that stopping is not necessary, both the first and the second surroundings sensors carry out respective surroundings sensing processes again so that on the basis of the respective new surroundings sensing process it is tested whether stopping is necessary, wherein if the respective testing of the new surroundings sensing processes provides different results, the emergency stop signal is generated.

3. Device (201) for operating a vehicle (301, 601) comprising an emergency stop apparatus (203) which is designed to stop the vehicle (301, 601) in the case of driverless driving of the vehicle (301, 601) within a carpark (501, 600) in response to an emergency stop signal and a checking apparatus (205) which is designed to check, when there is an emergency stop request that the vehicle (301, 601) should stop, whether the stopping is necessary, wherein the checking apparatus (205) is designed to generate an emergency stop signal for the emergency stop apparatus (203) only in the event of a positive check, **characterized in that** the checking comprises testing as to whether a further emergency stop request is present, wherein an emergency stop signal is generated only if a further emergency stop request is present, wherein the checking is carried out by means of the vehicle (301, 601) or a vehicle-external carpark management server (509, 605), wherein the emergency stop request is generated by the vehicle (301, 601) itself on the basis of a dangerous situation detected by the vehicle (301, 601) or by the carpark management server (509, 605) itself on the basis of a dangerous situation detected by the carpark management server (509, 605), wherein the checking comprises the fact that the vehicle (301, 601) or the carpark management server (509, 605) checks the detected dangerous situation to determine whether the stopping is necessary, and wherein the dangerous situation has been detected on the basis of a first surroundings sensing process of a first surroundings sensor, wherein the checking of the detected dangerous situation is carried out on the basis of a second surroundings sensing process of a second surroundings sensor, in order to check the plausibility of the first and second surroundings sensing processes with respect to one another, wherein the first surroundings sensor and the second surroundings sensor are surroundings sensors of a surroundings sensor system (613) of the vehicle, or the first and second surroundings sensors are surroundings sensors of the carpark's own surroundings sensor system (609), or the first surroundings sensor is a surroundings sensor of a vehicle-external surroundings sensor system (613), and the second surroundings sensor is a surroundings sensor of a surroundings sensor system (609) of the actual carpark, or vice versa.

4. Vehicle (301, 601) which is designed for driverless driving within a carpark (501, 600), wherein the vehicle (301, 601) comprises the device (201) according to Claim 3.

5. Method for operating a carpark (501, 600) for vehicles (301, 601) which are operated according to one of Claims 1 and 2, wherein in the case of driverless driving of a vehicle (301, 601) within the carpark (501, 600) and when there is an emergency stop request that the vehicle (301, 601) should stop, it is checked (401) in a vehicle-external fashion whether the stopping is necessary, wherein an emergency stop signal (403) is generated only in the event of a positive check and is transmitted (405) via a communication network to the vehicle (301, 601) which is driving in a driverless fashion, wherein an emergency stop request is received by a user (617) of a communication network via the communication network by means of a carpark management server (509, 605) of the carpark (501, 600), wherein the vehicle-external checking is carried out by means of the carpark management server (509, 605) which generates the emergency stop signal in the event of a positive check and transmits it via a communication network to the vehicle (301, 601) which is driving in a driverless fashion, **characterized in that** the emergency stop signal which is generated after the checking comprises an identifier or marking indicating that checking has taken place, wherein the carpark management server (509, 605) checks an instantaneous situation in which the vehicle (301, 601) is located, to determine whether a collision has a predetermined probability or a probability which is greater than a predetermined probability threshold value, wherein, in so far as this is the case this is an indication for the carpark management server (509, 605) that the stopping is necessary, since otherwise a collision could occur, wherein in this respect the carpark management server (509, 605) generates an emergency stop signal and then transmits it to the vehicle (301, 601) which is driving in a driverless fashion, via the communication network, and otherwise an emergency stop signal is not generated and in this respect it is also the case that no emergency stop signal is transmitted via the communication network to the vehicle (301, 601) which is driving in a driverless fashion.

6. Carpark (501, 600) for vehicles (301, 601), wherein the carpark (501, 600) is designed to carry out the method according to Claim 5.

7. Computer program product comprising program code for carrying out the method according to one of Claims 1 or 2 and/or 5 if the computer program is run on a computer.

## Revendications

1. Procédé pour faire fonctionner un véhicule (301, 601), dans lequel, lorsque le véhicule (301, 601) roule sans conducteur à l'intérieur d'un parc de stationnement (501, 600) et en présence d'une demande d'arrêt d'urgence demandant que le véhicule (301, 601) roulant sans conducteur s'arrête, on vérifie (101) si l'arrêt est nécessaire, dans lequel, uniquement en cas de vérification positive, un signal d'arrêt d'urgence est généré (103) en réponse auquel le véhicule (301, 601) s'arrête (105) sans conducteur, **caractérisé en ce que** la vérification comprend un contrôle s'il existe une demande d'arrêt d'urgence supplémentaire, le signal d'arrêt d'urgence n'étant généré qu'en présence d'une demande d'arrêt d'urgence supplémentaire,
la vérification étant effectuée au moyen du véhicule (301, 601) ou d'un serveur de gestion de parc de stationnement (509) à l'extérieur du véhicule, et la demande d'arrêt d'urgence étant générée par le véhicule (301, 601) lui-même en raison d'une situation dangereuse identifiée par le véhicule (301, 601) ou ayant été générée par le serveur de gestion de parc de stationnement (509, 605) lui-même en raison d'une situation identifiée par le serveur de gestion de parc de stationnement (509, 605), dans lequel la vérification comprend le fait que le véhicule (301, 601) ou le serveur de gestion de parc de stationnement (509, 605) vérifie la situation dangereuse identifiée pour savoir si l'arrêt est nécessaire, la situation dangereuse ayant été identifiée sur la base d'une première détection d'environnement d'un premier capteur d'environnement, dans lequel la vérification de la situation dangereuse identifiée est effectuée sur la base d'une deuxième détection d'environnement d'un deuxième capteur d'environnement afin d'établir la plausibilité de la première et de la deuxième détection d'environnement l'une par rapport à l'autre, le premier capteur d'environnement et le deuxième capteur d'environnement étant des capteurs d'environnement d'un système de capteurs d'environnement (613) du véhicule ou le premier et le deuxième capteur d'environnement étant des capteurs d'environnement du système de capteurs d'environnement (609) propre au parc de stationnement ou le premier capteur d'environnement étant un capteur d'environnement d'un système de capteurs d'environnement (613) à l'intérieur du véhicule et le deuxième capteur d'environnement étant un capteur d'environnement d'un système de capteurs d'environnement (609) propre au parc de stationnement ou vice versa.

2. Procédé selon la revendication 1, dans lequel, si la vérification de la situation dangereuse identifiée sur la base de la deuxième détection d'environnement indique qu'un arrêt n'est pas nécessaire, à la fois le premier et le deuxième capteur d'environnement effectuent à nouveau une détection d'environnement respective de sorte que sur la base de la nouvelle détection d'environnement respective, on vérifie si un arrêt est nécessaire, dans lequel le signal d'arrêt d'urgence est généré si le contrôle respectif des nouvelles détections d'environnement aboutit à des résultats différents.

3. Dispositif (201) pour faire fonctionner un véhicule (301, 601), comprenant un dispositif d'arrêt d'urgence (203) qui est réalisé pour arrêter le véhicule (301, 601) lorsque le véhicule (301, 601) roule sans conducteur à l'intérieur d'un parc de stationnement (501, 600) en réponse à un signal d'arrêt d'urgence, et un dispositif de vérification (205) qui est réalisé, en présence d'une demande d'arrêt d'urgence demandant que le véhicule (301, 601) s'arrête, pour vérifier si l'arrêt est nécessaire, le dispositif de vérification (205) étant réalisé pour générer un signal d'arrêt d'urgence destiné au dispositif d'arrêt d'urgence (203) uniquement en cas de vérification positive, **caractérisé en ce que** la vérification comprend un contrôle s'il existe une demande d'arrêt d'urgence supplémentaire, le signal d'arrêt d'urgence n'étant généré qu'en présence d'une demande d'arrêt d'urgence supplémentaire,
dans lequel la vérification est effectuée au moyen du véhicule (301, 601) ou d'un serveur de gestion de parc de stationnement (509, 605) à l'extérieur du véhicule, la demande d'arrêt d'urgence étant générée par le véhicule (301, 601) lui-même en raison d'une situation dangereuse identifiée par le véhicule (301, 601) ou ayant été générée par le serveur de gestion de parc de stationnement (509, 605) lui-même en raison d'une situation identifiée par le serveur de gestion de parc de stationnement (509, 605), dans lequel la vérification comprend le fait que le véhicule (301, 601) ou le serveur de gestion de parc de stationnement (509, 605) vérifie la situation dangereuse identifiée pour savoir si l'arrêt est nécessaire, la situation dangereuse ayant été identifiée sur la base d'une première détection d'environnement d'un premier capteur d'environnement, dans lequel la vérification de la situation dangereuse identifiée est effectuée sur la base d'une deuxième détection d'environnement d'un deuxième capteur d'environnement afin d'établir la plausibilité de la première et de la deuxième détection d'environnement l'une par rapport à l'autre,
le premier capteur d'environnement et le deuxième capteur d'environnement étant des capteurs d'environnement d'un système de capteurs d'environnement (613) du véhicule ou le premier et le deuxième capteur d'environnement étant des capteurs d'environnement du système de capteurs d'environnement (609) propre au parc de stationnement, ou le premier capteur d'environnement étant un capteur d'environnement d'un système de capteurs d'environnement (613) à l'intérieur du véhicule et le deuxième capteur d'environnement étant un capteur d'environnement d'un système de capteurs d'environnement (609) propre au parc de stationnement ou vice versa.

4. Véhicule (301, 601), réalisé pour rouler sans conducteur à l'intérieur d'un parc de stationnement (501, 600), le véhicule (301, 601) comprenant le dispositif (201) selon la revendication 3.

5. Procédé d'exploitation d'un parc de stationnement (501, 600) pour véhicules (301, 601) qui sont amenés à fonctionner selon l'une quelconque des revendications 1 ou 2, dans lequel, si un véhicule (301, 601) roule sans conducteur à l'intérieur du parc de stationnement (501, 600) et en présence d'une demande d'arrêt d'urgence demandant que le véhicule (301, 601) s'arrête, on vérifie à l'extérieur du véhicule (401) si l'arrêt est nécessaire, dans lequel uniquement en cas de vérification positive, un signal d'arrêt d'urgence est généré (403) et envoyé (405) au véhicule (301, 601) roulant sans conducteur par un réseau de communication, dans lequel une demande d'arrêt d'urgence provenant d'un abonné (617) d'un réseau de communication est reçue par le réseau de communication au moyen d'un serveur de gestion de parc de stationnement (509, 605) du parc de stationnement (501, 600), la vérification à l'extérieur du véhicule étant effectuée au moyen du serveur de gestion de parc de stationnement (509, 605) qui génère le signal d'arrêt d'urgence en cas de vérification positive et l'envoie au véhicule (301, 601) roulant sans conducteur par un réseau de communication, **caractérisé en ce que** le signal d'arrêt d'urgence qui est généré après la vérification comprend un identifiant ou un marquage indiquant qu'une vérification a eu lieu, le serveur de gestion de parc de stationnement (509, 605) vérifiant une situation instantanée dans laquelle se trouve le véhicule (301, 601) pour savoir si une collision présente une probabilité prédéterminée ou une probabilité qui est supérieure à une valeur seuil de probabilité prédéterminée, dans lequel, le cas échéant, ceci signifie pour le serveur de gestion de parc de stationnement (509, 605) qu'un arrêt est nécessaire car une collision pourrait survenir sinon, dans lequel le serveur de gestion de parc de stationnement (509, 605) génère de ce fait un signal d'arrêt d'urgence et l'envoie ensuite au véhicule (301, 601) roulant sans conducteur par le réseau de communication, autrement aucun signal d'arrêt d'urgence n'est généré et par conséquent aucun signal d'arrêt d'urgence n'est envoyé non plus au véhicule (301, 601) roulant sans conducteur par le réseau de communication.

6. Parc de stationnement (501, 600) pour véhicules (301, 601), le parc de stationnement (501, 600) étant réalisé pour effectuer le procédé selon la revendication 5.

7. Produit de programme informatique, comprenant du code programme pour effectuer le procédé selon l'une quelconque des revendications 1 ou 2 et/ou 5 lorsque le programme informatique est exécuté sur un ordinateur.
